# EUROPEAN PATENT SPECIFICATION

(11) **EP 3 088 112 B1**
(45) Date of publication and mention of the grant of the patent: **26.04.2023**
(21) Application number: 14875805.5
(22) Date of filing: 24.12.2014
(51) Int. Cl.: B23C 5/10

(54) **REPLACEABLE BLADE EDGE ROTARY CUTTING TOOL AND TOOL BODY**
ROTIERENDES SCHNEIDWERKZEUG MIT AUSTAUSCHBARER KLINGENKANTE UND WERKZEUGKÖRPER
OUTIL DE DÉCOUPE ROTATIF À BORD DE LAME REMPLAÇABLE ET CORPS D'OUTIL

(30) Priority: 25.12.2013 JP 2013266252
(43) Date of publication of application: 02.11.2016
(73) Proprietor: Tungaloy Corporation, Iwaki-shi Fukushima 970-1144 (JP)
(72) Inventor: ASO Takahiro, Iwaki-shi Fukushima 970-1144 (JP)
(74) Representative: Vossius & Partner Patentanwälte Rechtsanwälte mbB
(86) International application number: PCT/JP2014/084168
(87) International publication number: WO 2015/098973

(56) References cited:
- WO-A1-99/28074
- JP-A- 2002 512 131
- JP-A- 2004 510 594
- JP-A- 2007 268 693
- JP-A- 2007 268 693
- JP-A- 2011 521 794
- JP-A- 2012 020 394
- JP-U- H1 135
- JP-Y2- H0 118 211
- US-A- 5 083 887
- US-A- 5 913 644
- US-A1- 2005 084 341
- US-A1- 2005 084 341
- US-A1- 2011 123 280
- US-B1- 6 976 811

## Description

### Technical Field

The present invention relates to an indexable rotary cutting tool and a tool body. More specifically, the present invention relates to an indexable roughing end mill on which a plurality of cutting inserts is mounted and a tool body applied to such end mill.

### Background Art

Conventionally, there has been an indexable roughing end mill as one type of indexable rotary cutting tools for the purpose of providing highly-efficient work. The indexable roughing end mill has a cylindrical tool body that is provided with a plurality of grooves extending from its base end side toward its leading end side in a peripheral surface of the tool body and a plurality of cutting inserts is removably mounted along the grooves. Since the plurality of inserts arranged in a direction of a rotational axis of the tool body is involved in cutting in such roughing end mill, the depth of cut provided by the tool is significantly large. Accordingly, by feeding the tool in a horizontal direction relative to a workpiece while maintaining such a large depth of cut, a highly-efficient cutting process can be performed. However, in the indexable roughing end mill, the number of contacts between the cutting tool and the workpiece that occurs during a cutting process is larger than in normal tools, and therefore vibration (chattering) is likely to occur due to the resonance of vibration (cutting vibration) generated during the cutting process, which causes a work surface of the workpiece to be roughened and causes cutting edges of the cutting inserts to be likely to suffer from chipping.

In order to solve the above-mentioned vibration problem, various proposals have been made. For example, Patent Document 1 discloses an indexable roughing end mill in which a plurality of cutting inserts is arranged in two types of arrangements - cutting edge array pattern A and cutting edge array pattern B - in four spiral grooves provided in a tool body and when angles formed by adjacent cutting inserts in a common spiral groove and an axis of the tool in a side development elevation of the tool body are defined as arrangement angles, the arrangement angles between the cutting inserts have been devised so as to be adjusted appropriately in each of the cutting edge array pattern A and cutting edge array pattern B. With such configuration, time intervals of contacts between the workpiece and the plurality of cutting inserts involved in the cutting can be shifted from each other. Accordingly, the indexable roughing end mill of Patent Document 1 can provide an effect of suppressing resonance and thereby suppressing chattering. Patent Document 2 discloses a rotary cutting tool having at least two spacing irregularities. In the first irregularity, columns of pockets, typically associated with flutes, are staggered circumferentially out of even spacing. In the second irregularity, at least some pockets are arranged at different radial rake angles.

### Citation List

### Patent Document

Patent Document 1: JP2012-020394 A
Patent Document 2: US 2005/084341 A1

### Summary

### Technical Problem

Although a certain level of chattering suppression effect can be obtained by the indexable roughing end mill described in Patent Document 1 and US-A-5913644, the effect still cannot be considered sufficient. This is because, further smoothness in a work surface of a workpiece has been demanded in recent times and the generation of chattering has been required to be suppressed in a more reliable manner.

An object of the present invention is to provide an indexable rotary cutting tool and a tool body capable of further suppressing the generation of chattering as compared to the conventional indexable roughing end mills.

### Solution to Problem

The present invention provides a rotary cutting tool (10) as set forth in the claims.

### Advantageous Effects of Invention

According to the present invention, it is possible to set the timings at which the cutting inserts bite into a workpiece irregularly and to suppress chattering with the configuration of not allowing the plurality of cutting inserts to simultaneously bite into the workpiece.

### Brief Description of Drawings

Fig. 1 is a perspective view showing an embodiment of an indexable rotary cutting tool according to the present invention.
Fig. 2 is a perspective view showing an embodiment of a tool body according to the present invention, to which the cutting tool of Fig. 1 is applied.
Fig. 3A is a diagram showing a first end surface (base end surface) of the tool body of Fig. 2.
Fig. 3B is a diagram showing a second end surface (leading end surface) of the tool body of Fig. 2.
Fig. 4 is a side view showing the tool body of Fig. 2.
Fig. 5A is a perspective view showing an embodiment of a cutting insert that is applicable to the cutting tool of Fig. 1.
Fig. 5B is a top view of the cutting insert.
Fig. 5C is a side view of the cutting insert.
Fig. 5D is a bottom view of the cutting insert.
Fig. 6 is a side view showing the indexable rotary cutting tool shown in Fig. 1.
Fig. 7A is a diagram showing the second end surface (leading end surface) of the tool body for explaining a manner of arranging a plurality of cutting inserts in spiral grooves in the indexable rotary cutting tool shown in Fig. 1.
Fig. 7B is a conceptual diagram showing only a series of cutting inserts arranged in one spiral groove of Fig. 7A.
Fig. 8 is a diagram showing the second end surface (leading end surface) of the tool body for explaining an angular relationship between spiral grooves in the indexable rotary cutting tool shown in Fig. 1.
Fig. 9 is a side view showing the indexable rotary cutting tool shown in Fig. 1 for explaining an effect provided by determining the angular relationship between the spiral grooves as shown in Fig. 8.

### Description of Embodiments

Embodiments of the present invention will now be described with reference to the attached drawings.

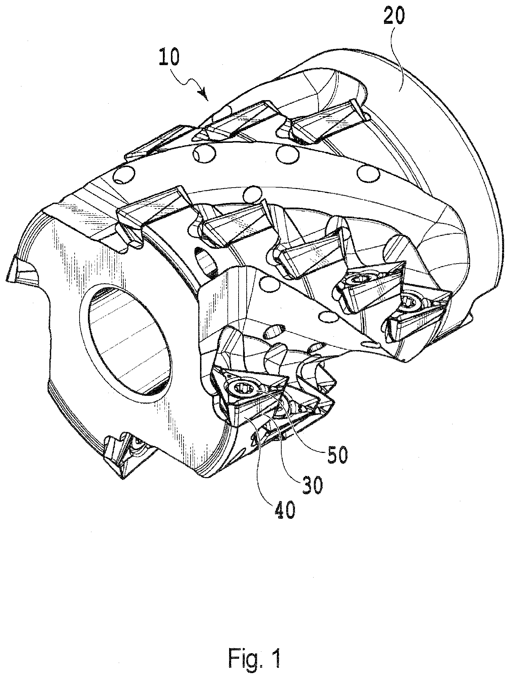

An indexable rotary cutting tool 10 according to the present embodiment is basically constituted by: a substantially cylindrical tool body 20 having a plurality of insert seats 30; and a plurality of cutting inserts 40 mounted on the insert seats 30, as shown in Fig. 1.

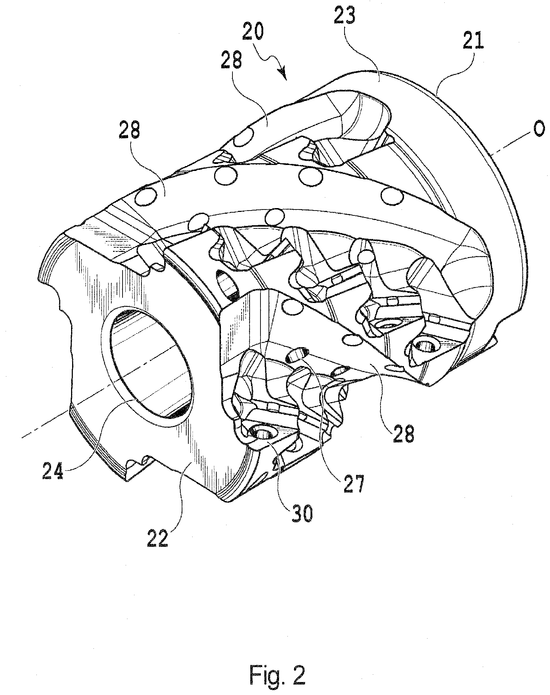

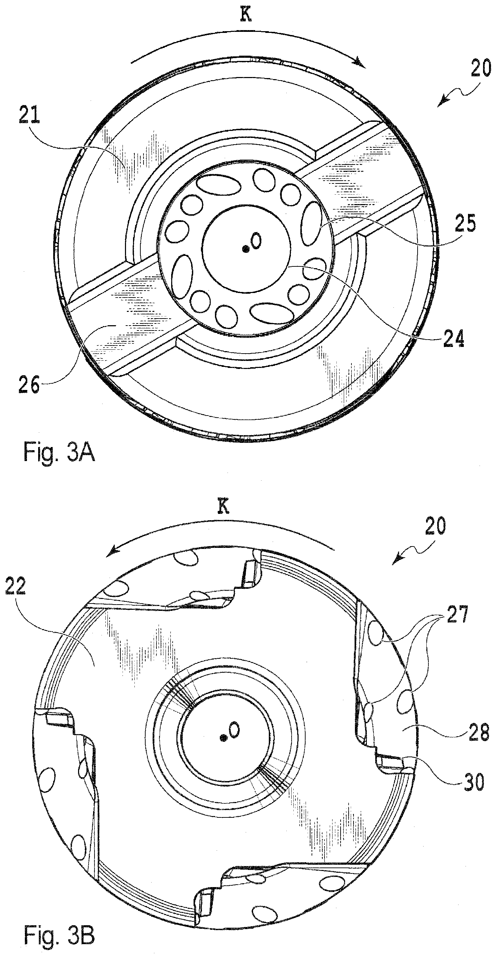

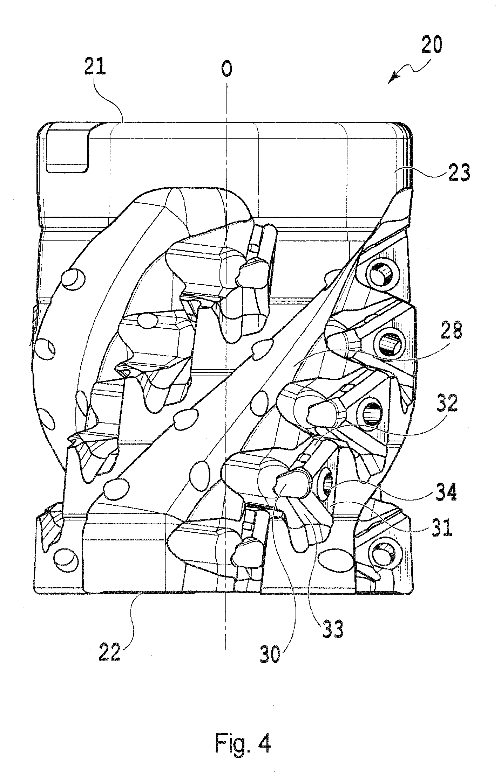

As shown in Figs. 2-4, the tool body 20 has a cylindrical shape including a substantially circular first end surface 21, a second end surface 22 arranged so as to oppose the first end surface 21 and having a substantially circular shape similarly to the first end surface 21, and a peripheral surface 23 connecting these end surfaces 21, 22. The tool body 20 has a rotational axis O passing through a center point of the first end surface 21 and a center point of the second end surface 22. The indexable rotary cutting tool 10 rotates with respect to the rotational axis O. The first end surface 21 is an end surface arranged at a base end side of the tool body 20 and will also be referred to as a base end surface in the following description. Herein, the base end side of the tool body 20 refers to a side to be attached to a machine tool. The second end surface 22 is an end surface arranged at a leading end side of the tool body 20 and will also be referred to as a leading end surface in the following description. Herein, the leading end side of the tool body 20 refers to a side which is to be brought closer to a workpiece. The tool body 20 is provided with a through hole 24 formed so as to extend from the first end surface 21 to the second end surface 22 along the rotational axis O and a plurality of coolant supply holes 25 through which coolant flows. An attachment bolt (not shown) to be used for fixing the tool body 20 to the machine tool is inserted from the second end surface 22 side into the through hole 24. The first end surface 21 is provided with an opening of the through hole 24 for allowing a leading end of the attachment bolt to be received in and engaged with a threaded hole of the machine tool, openings of the coolant supply holes 25, and a key groove 26 to be engaged with a key of the machine tool to receive a rotational force transferred from the machine tool. The second end surface 22 is provided with an opening of the through hole 24 for allowing the attachment bolt to be inserted and cutouts corresponding to the insert seats 30 for cutting inserts in a first segment, which will be described later.

A plurality of spiral grooves 28 is formed in the peripheral surface 23 between the first end surface 21 and the second end surface 22 of the tool body 20. The spiral grooves 28 have certain width and depth and are formed so as to be swirled counterclockwise from the base end side toward the leading end side, as viewed from the leading end surface side of the tool body 20. The spiral grooves 28 start from a portion of the peripheral surface 23 near the first end surface 21 of the tool body 20 and reach the second end surface 22. Although four spiral grooves 28 are provided in the present embodiment shown in the drawing, the number of spiral grooves 28 is not limited thereto, as long as two or more spiral grooves are provided. The plurality of insert seats 30 is formed along the spiral groove 28 in areas facing forward in a tool rotating direction K in the spiral groove 28. In the present embodiment shown in the drawing, although five insert seats 30 are provided in one spiral groove 28, the number of insert seats 30 is not limited thereto, as long as two or more insert seats 30 are provided. However, every spiral groove is formed such that one insert seat is located on a portion at the second end surface 22. On the other hand, a plurality of coolant ejection ports 27 for ejecting the coolant is provided in areas facing opposite to the tool rotating direction K in the spiral groove 28. The coolant ejection ports 27 communicate with the above-mentioned coolant supply holes 25. The number, arrangement, etc. of the coolant ejection ports 27 may be changed as appropriate, in accordance with a desired cooling performance, etc.

The insert seat 30 is basically constituted by a flat bottom surface 31 that is brought into contact with a seating surface (lower surface) 42 of the cutting insert 40 and two flat side surfaces 32, 33 that are brought into contact with part of a peripheral surface 43 of the cutting insert 40. The bottom surface 31 of the insert seat 30 has a shape and dimension that are similar to those of the seating surface 42 of the cutting insert 40 to be mounted. The shape is substantially triangular in the present embodiment. A fixture hole 34 for fixing the cutting insert 40 onto the insert seat 30 by screwing is provided at substantially the center of the bottom surface 31. The side surfaces 32 and 33 of the insert seats 30 are constituted by a first side surface 32 facing the base end side and the peripheral surface side of the tool and a second side surface 33 facing the leading end side and the peripheral surface side of the tool. The first side surface 32 and the second side surface 33 intersect with each other at about 60 degrees. The bottom surface 31 intersects with the first side surface 32 and the second side surface 33 at an obtuse angle. The shape, number and positional relationship of the bottom surface 31 and the side surfaces 32, 33 of the insert seat 30 may be appropriately changed as needed, in consideration of the shape of the cutting insert 40 to be mounted, etc.

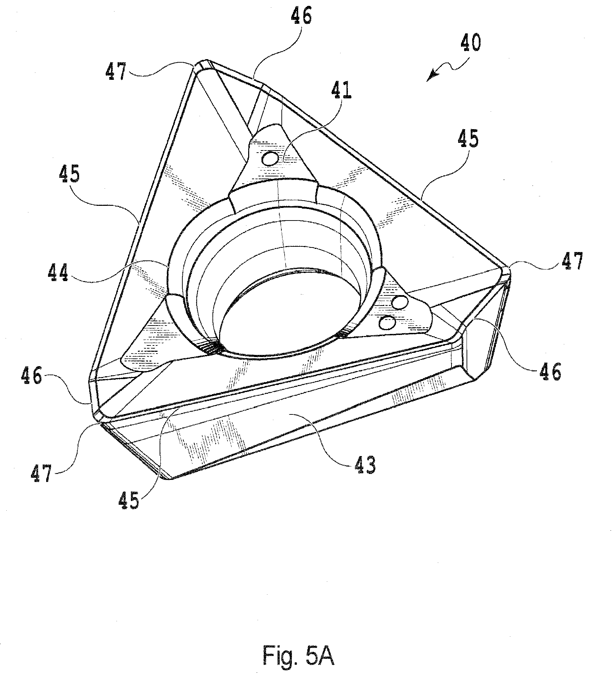

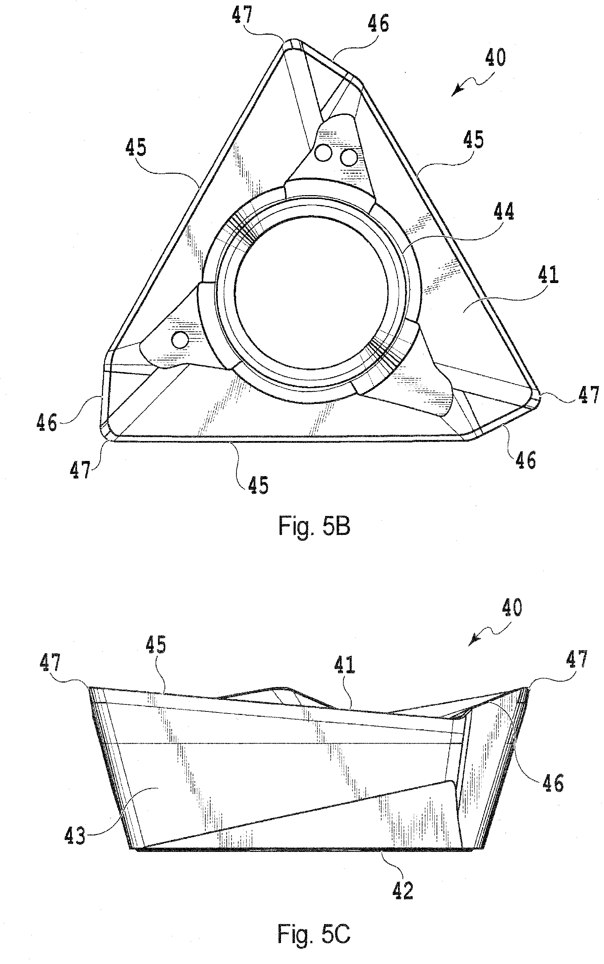

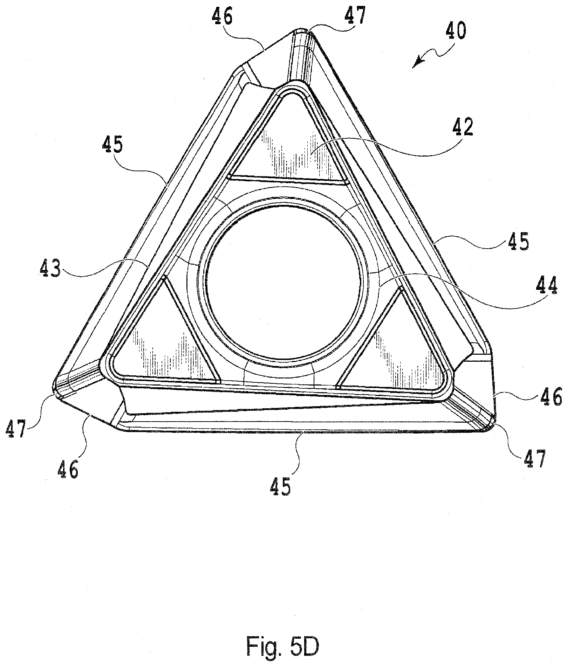

The cutting insert 40 used in the present embodiment has a flattened, substantially regular triangular prism shape in a planar view, as shown in Figs. 5A-5D. Specifically, the cutting insert 40 is basically constituted by an upper surface (first surface) 41 having a substantially regular triangular shape, a lower surface (a second surface serving as a seating surface to be seated onto the insert seat 30) 42 arranged so as to oppose the upper surface 41 and having a substantially regular triangular shape, and the peripheral surface 43 connecting the upper surface 41 and the lower surface 42. To be more precise, the upper surface 41 of the cutting insert 40 employed in the present embodiment has a hexagonal shape with a portion near each vertex of the triangle being chamfered. The hexagonal shape has long side portions that each constitute a side of the original triangular shape and short side portions that each appear on the chamfered portion, the long side portions and the short side portions being formed alternately with each long side portion and each short side portion intersecting at a substantially right angle or an obtuse angle.

Part of the intersecting edge between the upper surface 41 and the peripheral surface 43 can function as cutting edges. Specifically, major cutting edges 45 are formed on the long side portions, minor cutting edges 46 are formed on the short side portions, and corner cutting edges 47 are formed on each corner at which the long side portion and the short side portion intersect with each other at a substantially right angle. An angle formed by the upper surface 41 and the peripheral surface 43 is an acute angle and an angle formed by the lower surface 42 and the peripheral surface 43 is an obtuse angle. In other words, this cutting insert 40 is a so-called positive type. A mounting hole 44 that receives a fastening screw 50 for removably mounting the cutting insert 40 to the insert seat 30 is formed so as to penetrate substantially the center of the upper surface 41 and the lower surface 42. Accordingly, since the cutting insert 40 of the present embodiment has three sets of a major cutting edge 45, a minor cutting edge 46 and a corner cutting edge 47, the sets of cutting edges can be used sequentially while changing the attachment positions - in other words, a single cutting insert 40 has three positions that can be involved in a cutting process. However, the shape and configuration of the cutting insert 40 used in the indexable rotary cutting tool 10 of the present invention are not limited thereto and they may be appropriately changed as needed. For example, the contour of the cutting insert 40 may be other polygonal shapes, such as quadrangles and pentagons, and the cutting insert may be of a negative type in which the peripheral surface intersects with the upper surface and the lower surface at 90 degrees.

Such cutting insert 40 is mounted on the insert seat 30 of the tool body 20 by the fastening screw 50. At this time, the lower surface 42 of the cutting insert 40 is brought into contact with the bottom surface 31 of the insert seat 30. In addition, the peripheral surface 43 of the cutting insert 40 is brought into contact with the first side surface 32 and the second side surface 33 of the insert seat 30. At this time, the cutting insert 40 is mounted so as to be arranged in positional relationships in which the major cutting edge 45 is projected from and parallel to the peripheral surface 23 of the tool body 20 and the minor cutting edge 46 faces the leading end surface 22 side of the tool body 20 (with the exception that the minor cutting edge 46 of the cutting insert 40 that is mounted closest to the leading end is projected from the leading end surface 22) and is parallel to the leading end surface 22 (i.e., orthogonal to a central axis O). By fixing the cutting insert 40 to the tool body 20 using the fastening screw 50, it is possible to eliminate projections projected in the groove 28, in comparison with a configuration using a wedge, a presser piece, etc. to fix the cutting insert 40, and it is therefore possible to enhance the discharging efficiency of chips.

The cutting insert 40 can be made of hard materials, such as a cemented carbide, cermet, ceramic, a material obtained by applying a coating to these materials, an ultrahigh-pressure sintered body containing diamond or cubic boron nitride, and a material obtained by applying a coating to the ultrahigh-pressure sintered body containing cubic boron nitride.

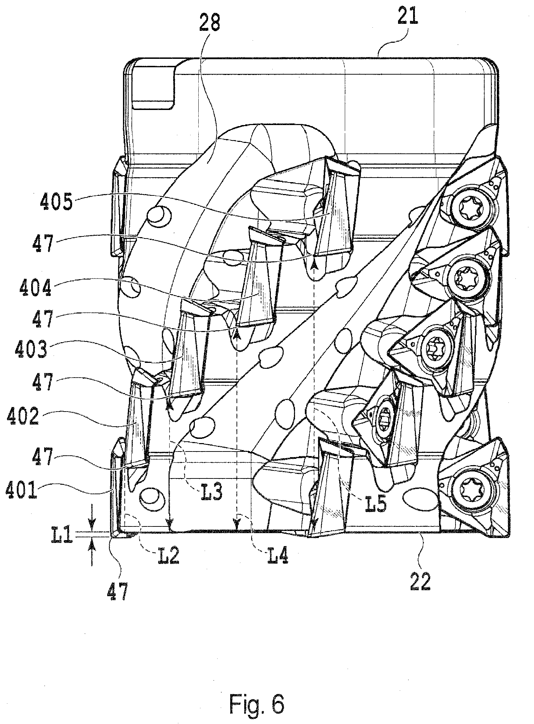

In a side view of the tool body 20, distances from the leading end surface 22 of the tool body 20 to the respective cutting inserts 40 in the direction of the rotational axis O (specifically, the distances from the leading end surface 22 to the corner cutting edges 47 of the respective cutting inserts 40) are equal among all the spiral grooves 28. More specifically, as shown in Fig. 6, when a cutting insert 401 located closest to the leading end side of the tool in each spiral groove 28 is defined as a first segment, the cutting insert 402 next to the first segment is defined as a second segment, the cutting insert 403 next to the second segment is defined as a third segment, a cutting insert 404 next to the third segment is defined as a fourth segment, and a cutting insert 405 closest to the base end is defined as a fifth segment or last segment, from the leading end side toward the base end side, the cutting inserts 401 in the first segments in all the spiral grooves 28 are mounted at a position at an equal distance L1 from the leading end surface of the tool. In the present embodiment, not only the cutting inserts 401 in the first segments, but also the cutting inserts 402, 403, 404, 405 in the second segment, third segment, fourth segment and fifth segment in the respective spiral grooves 28 are formed at positions at respective equal distances L2, L3, L4, L5 from the leading end surface in all the spiral grooves 28. It should be noted that any number of segments of the cutting inserts 40 may be provided, as long as there are two or more. Since the number of cutting inserts 40 in one spiral groove 28 is five in the present embodiment, five distances L1, L2, L3, L4, L5 are defined as the distances from the leading end surface 22 of the tool body 20 to the respective cutting inserts 40 in the direction of the rotational axis O. However, the number of such distances varies as a matter of course, depending on the number of the cutting inserts 40. Thus, even if the number of the cutting inserts 40 is changed, the above-mentioned relationship is still satisfied. In addition, in the present embodiment, all of the distances between the cutting inserts 40 (specifically, the distance between the corner cutting edges 47 of the cutting inserts 40) that are adjacent in the direction of rotational axis O in one groove 28 are set to equal. However, the configuration is not limited thereto and the distances between the cutting inserts 40 that are adjacent in the direction of the rotational axis O may be set so as to be different from each other, as needed.

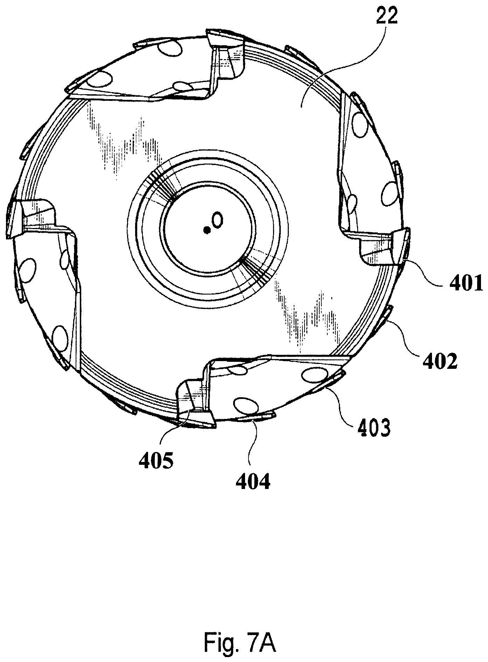

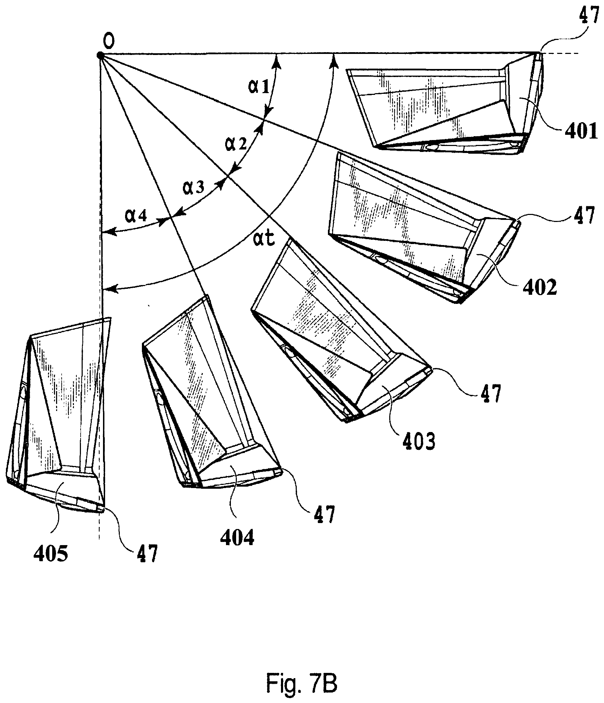

Furthermore, in the five cutting inserts 40 located in one spiral groove 28, all of the angles between the lines connecting the rotational axis O and the respective corner cutting edges 47 of the five cutting inserts 40 are equal, as viewed from the leading end surface side of the tool body 20. Specifically, as shown in Fig. 7(b), in the cutting inserts 401, 402, 403, 404, 405 in the first to fifth segments that are arranged from the leading end side toward the base end side of the tool body 20, an angle α1 between the cutting insert 401 in the first segment and the cutting insert 402 in the second segment, an angle α2 between the cutting insert 402 in the second segment and the cutting insert 403 in the third segment, an angle α3 between the cutting insert 403 in the third segment and the cutting insert 404 in the fourth segment, and an angle α4 between the cutting insert 404 in the fourth segment and the cutting insert 405 in the fifth segment are all configured to be equal. In addition, the angles α1, α2, α3, α4 are set as a common angle between the cutting inserts 40 arranged in all the spiral grooves 28. In other words, an angle between adjacent cutting inserts 40 in a common spiral groove 28 is constant in all the spiral grooves 28. Although the angle α is 23.5 degrees in the present embodiment, the angle is not limited to such value. Since the five cutting inserts 40 are mounted on one spiral groove 28 in the present embodiment, the four angles α1, α2, α3 and α4 are defined as the angle between the cutting inserts 40. However, the number of such angles varies as a matter of course, depending on the number of cutting inserts 40. Even if the number of cutting inserts 40 is changed, the above relationship is still satisfied.

In another embodiment, the angles between the cutting inserts 40 may be set such that the angle α1 between the cutting insert 401 in the first segment and the cutting insert 402 in the second segment is larger than the angles α2, α3, α4 between the cutting inserts 402, 403, 404, 405 in the second and subsequent segments. In this case, all the angles between the cutting inserts in the second and subsequent segments (in the present embodiment, the angles α2, α3, α4) are equal.

As described above, the relationship of α1 to α4 is only required to satisfy α1 ≥ α2 = α3 = α4.

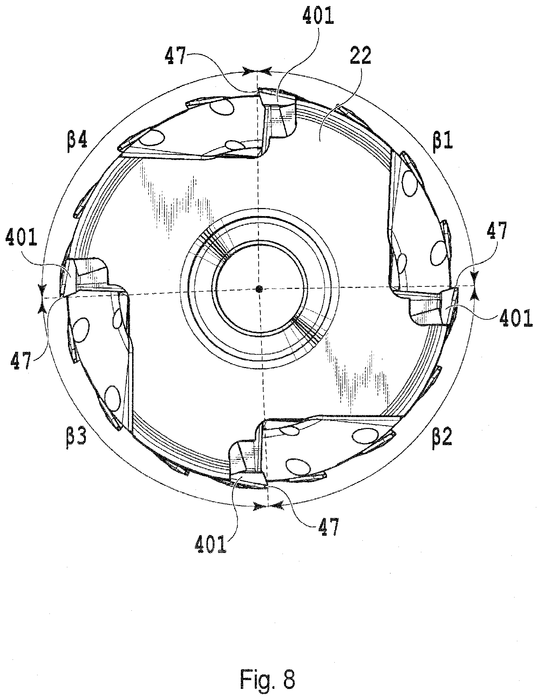

In the present embodiment, the fourth spiral grooves 28 are not provided at a constant pitch in a circumferential direction of the tool body 20. Specifically, as shown in Fig. 8, as viewed from the leading end surface side of the tool body 20, the angles between the lines connecting the rotational axis O of the tool body 20 and the corner cutting edges 47 of the cutting inserts 401 in the first segment in the respective spiral grooves 28, i.e., angles β1, β2, β3, β4 between the spiral grooves 28 that are adjacent in the circumferential direction, are configured so as to be different from each other. This is an arrangement referred to in the technical field to which the present invention belongs as an "irregular pitch." In the present embodiment, β1 is 90.2 degrees, β2 is 88.0 degrees, β3 is 89.8 degrees and β4 is 92 degrees. However, the specific angles are not limited to these values and may be changed as appropriate. Since the four spiral grooves 28 are provided in the present embodiment, the four angles β1, β2, β3 and β4 are defined as the angles between the spiral grooves 28. However, the number of such angles varies as a matter of course, depending on the number of spiral grooves 28. Even if the number of spiral grooves 28 is changed, the above relationship is still satisfied.

As a major feature of the present invention, as viewed from the leading end surface side of the tool body 20, an angle between the cutting insert 401 in the first segment and the cutting insert 405 in the last segment (the fifth segment in the present embodiment) in one spiral groove 28 does not coincide with any angle between adjacent spiral grooves 28. Specifically, a total value αt of the angles α1, α2, α3, α4 (see Fig. 7(b)) between adjacent cutting inserts 40 in one spiral groove 28 does not coincide with any of the angles β1, β2, β3, β4 between the adjacent spiral grooves 28. This relationship can be expressed in a more general way as follows.

When the positions of the cutting inserts 40 arranged in each spiral groove 28 are defined as a first segment to an n^{th} segment (where n is an integer of 2 or higher) from the leading end surface 22 side of the tool body 20 toward the base end surface 21 side, as viewed from the leading end surface side of the tool body 20, the angles β1, ...βm (where m is an integer of 2 or higher) between lines connecting the rotational axis O and the cutting inserts 40 in the first segments of the respective spiral grooves 28 are different from one another and the angle αt between the cutting insert 40 in the first segment and the cutting insert 40 in the n^{th} segment in one spiral groove 28 is different from any of the angles β1, ...βm (where m is an integer of 2 or higher) between the lines. In the present embodiment where all of α1 to α4 are equally set to 23.5 degrees, the angle αt is 94.0 degrees while the angle β1 is 90.2 degrees, the angle β2 is 88.0 degrees, the angle β3 is 89.8 degrees and the angle β4 is 92 degrees, and therefore the above-mentioned relationship is satisfied.

In the side view of the tool body 20, all the cutting inserts 40 are arranged so as to be tilted at a specific angle in a positive direction with respect to the rotational axis O in a state in which the cutting inserts 40 are mounted on the insert seats 30. In other words, a positive axial rake angle is set for the cutting inserts 40. In the present embodiment, this axial rake angle is 6.5 degrees in the present embodiment, although the axial rake angle is not limited thereto. In another embodiment, the axial rake angles of the cutting inserts 40 in the second and subsequent segments may be set larger than the axial rake angle of the cutting insert 40 in the first segment. In this example, all of the axial rake angles for the cutting inserts 40 in the second to fifth segments are the same. However, the axial rake angle is not limited to these examples and the axial rake angle may be set to a negative angle in consideration of the shape of the cutting inserts 40 to be mounted, or the axial rake angles may be set so as to be different from each other between the segments.

As described earlier, in the present embodiment, all of the five cutting inserts 40 mounted in each spiral groove 28 of the tool body 20 are of a common type (i.e., having the same dimension and shape) as shown in Figs. 5A to 5D. However, the configuration is not limited thereto and more than one type of cutting insert may be mounted. In the configuration of the present embodiment, in the cutting insert 40 in the first segment, arranged closest to the leading end of the tool, the major cutting edge 45 is involved in the cutting of a side work surface of a workpiece, the minor cutting edge 46 is involved in the cutting of a bottom work surface of the workpiece, and the corner cutting edge 47 is involved in the cutting of a work corner of the workpiece. On the other hand, in the cutting inserts 40 in the second to fifth segments, the minor cutting edges 46 and the corner cutting edges 47 are not involved in the cutting of the workpiece, although the major cutting edges 45 are involved in the cutting of the side work surface of the workpiece. Accordingly, for example, the cutting insert in the first segment may have a different shape or a different number of cutting edges from those of the cutting inserts in the second and subsequent segments. The dimension and shape of the insert seats 30 of the tool body 20 should obviously be determined so as to satisfy the conditions defined in the present invention, regardless of the type of cutting inserts to be mounted.

In a side view of the tool body 20, as shown in Fig. 6, the cutting inserts 40 are mounted so as to be arranged in an overlapped manner in the direction of the rotational axis O in one spiral groove 28. More specifically, the major cutting edges 45 of adjacent cutting inserts 40 in one spiral groove 28 overlap with each other in the direction of the rotational axis O. Thus, no area that remains uncut will be produced in the side work surface of the workpiece.

The advantageous effects of the indexable rotary cutting tool 10 according to the present embodiment will now be described.

The indexable rotary cutting tool 10 of the present embodiment has a characteristic configuration in which, when the positions of the cutting inserts 40 arranged in each spiral groove 28 are defined as a first segment to an n^{th} segment (where n is an integer of 2 or higher) from the leading end surface 22 side of the tool body 20 toward the base end surface 21 side as described above, as viewed from the leading end surface side of the tool body 20, all the angles β1, ...βm (where m is an integer of 2 or higher) between the lines connecting the rotational axis O and the cutting inserts 40 in the first segments of the respective spiral grooves 28 are different from each other and the angle αt between the cutting insert 40 in the first segment and the cutting insert 40 in the n^{th} segment in one spiral groove 28 is different from any of the angles β1, ...βm (where m is an integer of 2 or higher) between the lines. With such configuration, the following advantageous effects can be obtained.

First, by configuring the angles β1, ...βm between the adjacent spiral grooves 28 so as to be unequal to each other (in other words, in an irregular pitch), when the indexable rotary cutting tool 10 performs a cutting process while rotating, the major cutting edges 45 of the cutting inserts 40 come into contact with the workpiece at more complex timings, rather than regular timings. With such configuration, the waveform of vibrations generated in the indexable rotary cutting tool 10 is disturbed and resonance becomes less likely to occur.

In addition, by configuring the angle αt between the cutting insert 40 in the first segment and the cutting insert 40 in the last segment in one spiral groove 28 so as not to coincide with any of the angles β1, ...βm between the adjacent spiral grooves 28, a cutting insert mounted on one spiral groove 28 and a cutting insert mounted on another spiral groove 28 will not be aligned in the direction of the rotational axis O along the side surface of the tool body 20, and the timings at which the plurality of cutting inserts starts to contact with the workpiece can be shifted from each other.

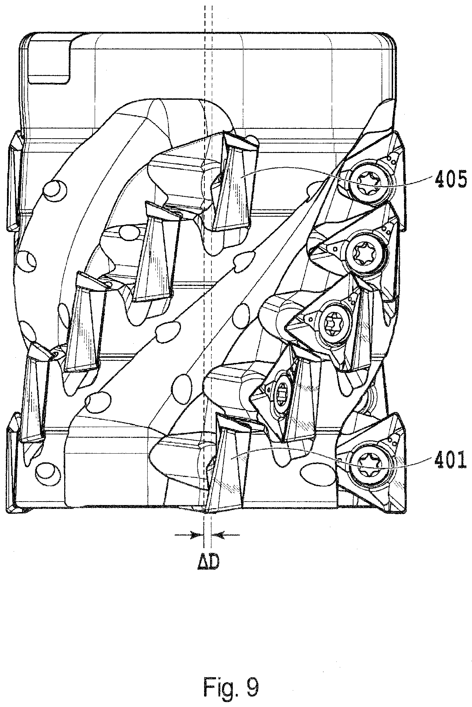

More specifically, unlike a configuration in which, as viewed from the leading end surface side, four spiral grooves are provided so as to be 90 degrees apart from each other and five cutting inserts are provided within a 90 degree angular range in each spiral groove, the four spiral grooves 28 are provided at an irregular pitch and the five cutting inserts 40 are provided within a 94 degree angular range in the present embodiment. As a result, since a positional deviation ΔD in a direction perpendicular to the rotational axis O is generated between the cutting insert 405 in the last (fifth) segment in one spiral groove 28 and the cutting insert 401 in the first segment of a spiral groove 28 that is adjacent to such one spiral groove 28 in a direction opposite to the tool rotating direction K, as shown in Fig. 9, these cutting inserts will not start contacting with the workpiece at the same time. In other words, the cutting insert 401 of a spiral groove on the rear side (a posterior spiral groove with respect to the tool rotating direction K) starts contacting with the workpiece earlier than the cutting insert 405 of a spiral groove on the front side (an anterior spiral groove with respect to the tool rotating direction K).

This relationship becomes true for the cutting inserts arranged in all the adjacent spiral grooves 28 by configuring the angle αt so as not to coincide with any of the angles β1, ...βm. As a result, it becomes possible to suppress a large impact that has been generated at every moment when a spiral groove involved in cutting is switched to the next spiral groove and it is therefore possible to reduce the generation of vibration itself. As described above, the present invention can exert a significant effect of suppressing chattering by way of the synergetic effect of the following two effects: (1) suppressing the generation of resonance and (2) reducing the generation of vibration itself.

It is also possible to further suppress the generation of resonance by configuring an absolute value of a difference between the angle αt between the cutting insert 40 in the first segment and the cutting insert 40 in the last segment and the angles β1, ...βm between the adjacent spiral grooves 28 so as to be smaller than the angles α1, ...αn-1 (where n is an integer of 2 or higher) between the cutting inserts 40. That is to say, since an angle between the cutting insert 405 in the last segment (fifth segment) in one spiral groove 28 and the cutting insert 401 in the first segment in a spiral groove 28 that is located on an opposite side of such one spiral groove 28 with respect to the tool rotating direction K (i.e., the above-mentioned absolute value of the difference) is smaller than the angles α1, ...αn-1 between the cutting inserts 40, the timings at which the respective cutting inserts 40 bite into the workpiece do not continue at a constant interval (i.e., at the same angle α1, ...αn-1) between the adjacent spiral grooves 28. As a result, the resonance can be further suppressed and the above effect of preventing chattering can be further enhanced.

In the present embodiment, regarding the spiral grooves having a constant torsional angle, all the distances L1, ... Ln from the leading end surface 22 of the tool body 20 to the respective cutting inserts 40 in the direction of the rotational axis O are set so as to be equal for all the spiral grooves 28, in a side view of the tool body 20. In addition, as viewed from the leading end surface side of the tool body 20, all the angles α1, ...αn-1 between the lines connecting the rotational axis O and the respective cutting inserts 40 are set so as to be equal. Since chips generated as a result of cutting are discharged through the spiral grooves 28, such constant torsional angle of the spiral grooves 28 allows the flow of the chips to be smoothly discharged without being blocked by wall surfaces of the spiral grooves 28. Accordingly, the spiral grooves 28 become less likely to be clogged by the chips. As a result, it is possible to suppress a phenomenon in which chip clogging in the spiral grooves 28 impedes the rotation of the indexable rotary cutting tool 10 and causes vibration and it is also possible to prevent the surface of the workpiece from being roughened due to abrasion caused by the chips.

Regarding the angles α1, ...αn-1 between the cutting inserts 40, in an embodiment in which the angle α1 between the cutting insert 40 in the first segment and the cutting insert 40 in the second segment is set so as to be larger than the angles α2, ...αn-1 (n-1 ≥ 3) between the cutting inserts 40 in the second and subsequent segments, only the thickness of a back metal portion of the tool body 20 (i.e., the thickness of the tool body 20 on the side of the bottom surface 31 of the insert seat 30) corresponding to the cutting insert 40 in the first segment can be further increased. With such configuration, it is possible to securely support the cutting insert 40 in the first segment to which the largest impact is to be applied when it bites into the workpiece and it is therefore possible to prevent vibration or fracture from being generated due to wobbling of the cutting insert 40 in the first segment. In this embodiment, the angles α2, ...αn-1 (n-1 ≥ 3) between the cutting inserts 40 in the second and subsequent segments may be determined as appropriate, as long as the condition in which the angles α2, ...αn-1 (n-1 ≥ 3) is smaller than the angle α1 is satisfied, and, for example, all the angles α2, ...αn-1 may be set so as to be equal. In such case, regarding the distances between the adjacent cutting inserts 40 in the direction of the rotational axis O, a distance between the cutting inserts 40 in the first and second segments is larger than a distance between the adjacent cutting inserts 40 in the second and subsequent segments.

The configuration of increasing the thickness of the back metal portion can be achieved in combination with the above-mentioned configuration of setting the angle α1 in the spiral groove 28 so as to be equal to the angles α2, ...αn-1. It is also possible to configure the angle α1 between the cutting insert 40 in the first segment and the cutting insert 40 in the second segment so as to be larger than the angles α2, ...αn-1 between the cutting inserts 40 in the second and subsequent segments, while setting all the distances between the adjacent cutting inserts 40 in the direction of the rotational axis O so as to be equal. In such cases, since the torsional angle between the first segment and the second segment in the spiral groove 28 becomes different from the torsional angles in the second and subsequent segments (the torsional angles in the second and subsequent segments become larger than the torsional angle between the first segment and the second segment), the discharging efficiency of the chips decreases to a certain extent. However, by configuring the torsional angles so as to vary appropriately, it is possible to obtain an effect in which the cutting insert 40 in the first segment can be supported rigidly while maintaining a sufficient discharging efficiency of the chips.

In an embodiment in which the axial rake angles of the cutting inserts 40 in the second and subsequent segments are set so as to be larger with respect to a positive side than the axial rake angle of the cutting insert 40 in the first segment, the following effect can be obtained. By setting the axial rake angles of the cutting inserts 40 so as to be large as a whole with respect to a positive side, the cutting resistance generated when the major cutting edges 45 cut the workpiece is reduced and the generation of vibration is significantly suppressed. In addition, since the direction in which the chips are discharged is a direction along the spiral groove 28, the discharging efficiency of the chips can be increased. However, the cutting insert 40 in the first segment is an only cutting insert whose minor cutting edge 46 is involved in the cutting of a bottom work surface of the workpiece and if the axial rake angle of the cutting insert 40 in the first segment is too large with respect to the positive side, the peripheral surface (flank) 43 of the cutting insert 40 may come into contact with the workpiece and the work surface may be roughened. Thus, it is preferable for the axial rake angle of the cutting insert 40 in the first segment to not be set so as to be large with respect to the positive side, unlike the other cutting inserts 40. On the other hand, regarding the cutting inserts 40 in the second and subsequent segments, the minor cutting edges 46 are not involved in cutting and the axial rake angles can therefore be set so as to be large with respect to the positive side.

## Claims

1. A rotary cutting tool (10), comprising:
a substantially cylindrical tool body (20) having a rotational axis (O) and cutting inserts (40) mounted on the tool body (20),
the tool body (20) having a peripheral surface (23) provided with a plurality of spiral grooves (28) in which a plurality of insert seats (30) is formed,
the cutting inserts (40) being removably arranged on the insert seats (30),
wherein, when positions of the cutting inserts (40) arranged in each of the spiral grooves (28) are defined as a first segment to an n^{th} segment, n being an integer of 2 or higher, from a leading end surface (22) side to a base end surface (21) side of the tool body (20):
as viewed from the leading end surface side of the tool body (20), all of angles (β1, ... βm, where m is an integer of 2 or higher) between lines connecting the rotational axis (O) and the cutting inserts (40) in the first segments of the respective spiral grooves (28) are different from each other; and
as viewed from the leading end surface side of the tool body (20), an angle (αt) between the cutting insert (40) in the first segment and the cutting insert (40) in the n^{th} segment, being a last segment, arranged in the spiral groove (28) is different from any of the angles (β1, ... βm, where m is an integer of 2 or higher) between the lines,
wherein each cutting insert (40) comprises a first surface (41) having a substantially regular triangular shape, a second surface (42) arranged so as to oppose the first surface (41), a peripheral surface (43) connecting the first surface (41) and the second surface (42), and a mounting hole (44) configured to receive a fastening screw (50) for removably mounting the cutting insert to the insert seat and formed so as to penetrate substantially the center of the first surface (41) and the second surface (42), more precisely the first surface (41) having a hexagonal shape with a portion near each vertex of the triangle being chamfered, the hexagonal shape having long side portions that each constitute a side of the original triangular shape and short side portions that each appear on the chamfered portion, the long side portions and the short side portions being formed alternately with each long side portion and each short side portion intersecting at a substantially right angle or an obtuse angle];
cutting edges are formed at intersecting edges between the first surface (41) and the peripheral surface (43), wherein major cutting edges (45) are formed on the long side portions and minor cutting edges (46) are formed on the short side portions;
each insert seat (30) comprises a flat bottom surface (31) configured to contact with the second surface (42) of the cutting insert (40), a pair of side surfaces (32, 33) and a fixture hole (34) provided at substantially a center of the bottom surface (31) for fixing the cutting insert onto the insert seat by screwing; and
the cutting inserts (40) are mounted on the insert seats (30) by the fastening screw (50) so that a major cutting edge (45) formed at one side of the regular triangular shape is projected from and parallel to the peripheral surface (23) of the tool body (20), and a part of the peripheral surface (43) of the cutting insert (40) that corresponds to remaining sides of the regular triangular shape contacts with the pair of side surfaces (32, 33).

2. The rotary cutting tool (10) according to claim 1, wherein an absolute value of a difference between: the angle (αt) between the cutting insert (40) in the first segment and the cutting insert (40) in the n^{th} segment; and the angles (β1, ... βm (where m is an integer of 2 or higher)) between the lines connecting the rotational axis (O) and the cutting inserts (40) in the first segments of the respective spiral grooves (28) is smaller than angles (α1, ...αn-1 (n-1 ≥ 2)) between lines connecting the rotational axis (O) and adjacent cutting inserts (40), as viewed from the leading end surface side of the tool body (20).

3. The rotary cutting tool (10) according to claim 1 or 2, wherein:
in a side view of the tool body (20), distances (L1, ... Ln (where n is an integer of 2 or higher)) from a leading end surface (22) of the tool body (20) to the respective cutting inserts (40) in a direction of the rotational axis (O) are equal among the respective segments of all the spiral grooves (28);
in each of the spiral grooves (28), all angles (α1, ... αn-1 (n-1 ≥ 2)) between lines connecting the rotational axis (O) and adjacent cutting inserts (40) are equal, as viewed from the leading end surface side of the tool body (20).

4. The rotary cutting tool (10) according to claim 1 or 2, wherein, as viewed from the leading end surface side of the tool body (20), regarding angles (α1, ... αn-1 (n-1 ≥ 3)) between lines connecting the rotational axis (O) and the respective adjacent cutting inserts (40) arranged in at least one of the spiral grooves (28), an angle (α1) between the cutting insert (40) in the first segment and the cutting insert (40) in a second segment is larger than angles (α2, ...αn-1 (n-1 ≥ 3)) between adjacent cutting inserts (40) in second and subsequent segments.

5. The rotary cutting tool (10) according to claim 4, wherein:
in a side view of the tool body (20), distances (L1, ... Ln (where n is an integer of 2 or higher)) from a leading end surface (22) of the tool body (20) to the respective cutting inserts (40) in the direction of the rotational axis (O) are equal among the respective segments of all the spiral grooves (28); and
all of the angles (α2, ... αn-1 (n-1 ≥ 3)) between the adjacent cutting inserts (40) in the second and subsequent segments are equal.

6. The rotary cutting tool (10) according to any one of claims 1 to 5, wherein an axial rake angle of the cutting inserts (40) in second and subsequent segments is larger with respect to a positive side than an axial rake angle of the cutting insert (40) in the first segment, in at least one of the spiral grooves (28).

## Patentansprüche

1. Rotierendes Schneidwerkzeug(10), aufweisend:
einen im Wesentlichen zylindrischen Werkzeugkörper (20) mit einer Drehachse (O) und an dem Werkzeugkörper (20) montierten Schneideinsätzen (40)
wobei der Werkzeugkörper (20) eine Umfangsfläche (23) aufweist, die mit einer Vielzahl von Spiralnuten (28) versehen ist, in denen eine Vielzahl von Einsatzsitzen (30) gebildet ist,
wobei die Schneideinsätze (40) entnehmbar an den Einsatzsitzen (30) angeordnet sind,
wobei, wenn Positionen der in jeder der Spiralnuten (28) angeordneten Schneideinsätze (40) als erstes Segment bis n-tes Segment, wobei n eine ganze Zahl größer gleich 2 ist, von einer vorderen Endflächenseite (22) zu einer Basisendflächenseite (21) des Werkzeugkörpers (20) definiert sind:
von der vorderen Endflächenseite des Werkzeugkörpers (20) betrachtet, sich alle Winkel (β1, ... βm, wobei m eine ganze Zahl größer gleich 2 ist) zwischen Linien, die die Drehachse (O) und die Schneideinsätze (40) in den ersten Segmenten der jeweiligen Spiralnuten (28) verbinden, voneinander unterscheiden; und
von der vorderen Endflächenseite des Werkzeugkörpers (20) betrachtet, ein Winkel (αt) zwischen dem Schneideinsatz (40) in dem ersten Segment und dem Schneideinsatz (40) in dem n-ten Segment, das ein letztes Segment ist, die in der Spiralnut (28) angeordnet sind, sich von einem der Winkel (β1, ... βm, wobei m eine ganze Zahl größer gleich 2 ist) zwischen den Linien unterscheidet,
wobei jeder Schneideinsatz (40), eine erste Oberfläche (41) mit einer im Wesentlichen gleichmäßigen Dreiecksform, eine zweite Oberfläche (42), die derart angeordnet ist, dass sie der ersten Oberfläche (41) zugewandt ist, eine Umfangsfläche (43), die die erste Oberfläche (41) und die zweite Oberfläche (42) verbindet, und eine Montagebohrung (44), die konfiguriert ist, eine Befestigungsschraube (50) zum entnehmbaren Montieren des Schneideinsatzes an dem Einsatzsitz aufzunehmen und derart ausgebildet ist, dass sie im Wesentlichen die Mitte der ersten Oberfläche (41) und der zweiten Oberfläche (42) durchdringt, aufweist, wobei die erste Oberfläche (41) genauer gesagt eine Sechseckform mit einem Abschnitt aufweist, der in der Nähe jedes Eckpunkts des Dreiecks abgeschrägt ist, wobei die Sechseckform lange Seitenabschnitte aufweist, die jeweils eine Seite der ursprünglichen Dreiecksform bilden, sowie kurze Seitenabschnitte aufweist, die jeweils auf dem abgeschrägten Abschnitt auftauchen, wobei die langen Seitenabschnitte und die kurzen Seitenabschnitte abwechselnd angeordnet sind, wobei jeder lange Seitenabschnitt und jeder kurze Seitenabschnitt sich in einem im Wesentlichen rechten Winkel oder in einem stumpfen Winkel schneiden;
Schneidkanten an einander schneidenden Kanten zwischen der ersten Oberfläche (41) und der Umfangsfläche (43) ausgebildet sind, wobei an den langen Seitenabschnitten Hauptschneidkanten (45) ausgebildet sind und an den kurzen Seitenabschnitten Nebenschneidkanten (46) ausgebildet sind;
jeder Einsatzsitz (30) eine flache Bodenfläche (31), die konfiguriert ist, die zweite Oberfläche (42) des Schneideinsatzes (40) zu berühren, ein Paar Seitenflächen (32, 33) sowie eine Befestigungsbohrung (34) aufweist, die im Wesentlichen in einer Mitte der Bodenfläche (31) vorgesehen ist, um den Schneideinsatz mittels Schrauben an dem Einsatzsitz zu befestigen; und
die Schneideinsätze (40) durch die Befestigungsschraube (50) derart an die Einsatzsitze (30) montiert werden, dass eine Hauptschneidkante (45), die an einer Seite der gleichmäßigen Dreiecksform ausgebildet ist, von und parallel zu der Umfangsfläche (23) des Werkzeugkörpers (20) vorsteht, und ein Teil der Umfangsfläche (43) des Schneideinsatzes (40), der übrigen Seiten der regelmäßigen Dreiecksform entspricht, das Paar von Seitenflächen (32, 33) berührt.

2. Rotierendes Schneidwerkzeug (10) nach Anspruch 1, wobei ein Betrag einer Differenz zwischen: dem Winkel (αt) zwischen dem Schneideinsatz (40) in dem ersten Segment und dem Schneideinsatz (40) in dem n-ten Segment; und den Winkeln (β1, ... βm (wobei m eine ganze Zahl größer gleich 2 ist)) zwischen den Linien, die die Drehachse (O) und die Schneideinsätze (40) in den ersten Segmenten der jeweiligen Spiralnuten (28) verbinden, kleiner ist als Winkel (α1, ... αn-1 (n-1 ≥ 2)) zwischen Linien, die die Drehachse (O) und benachbarte Schneideinsätze (40) miteinander verbinden, betrachtet von der vorderen Endflächenseite des Werkzeugkörpers (20).

3. Rotierendes Schneidwerkzeug (10) nach Anspruch 1 oder 2, wobei:
in einer Seitenansicht des Werkzeugkörpers (20) Abstände (L1, ... Ln (wobei n eine ganze Zahl größer gleich 2 ist)) von einer vorderen Endfläche (22) des Werkzeugkörpers (20) zu den jeweiligen Schneideinsätzen (40) in einer Richtung der Drehachse (O) unter den jeweiligen Segmenten aller Spiralnuten (28) gleich sind;
in jeder der Spiralnuten (28) alle Winkel (α1, ... αn-1 (n-1 ≥ 2)) zwischen Linien, die die Drehachse (O) und benachbarte Schneideinsätze (40) miteinander verbinden, von der vorderen Endflächenseite des Werkzeugkörpers (20) gesehen gleich sind.

4. Rotierendes Schneidwerkzeug (10) nach Anspruch 1 oder 2, wobei, betrachtet von der vorderen Endflächenseite des Werkzeugkörpers (20), in Bezug auf Winkel (α1, ... αn-1 (n-1 ≥ 3)) zwischen Linien, die die Drehachse (O) und die in zumindest einer der Spiralnuten (28) angeordneten jeweiligen benachbarten Schneideinsätze (40) verbinden, ein Winkel (α1) zwischen dem Schneideinsatz (40) in dem ersten Segment und dem Schneideinsatz (40) in einem zweiten Segment größer als Winkel (α2, ... αn-1 (n-1 ≥ 3)) zwischen benachbarten Schneideinsätzen (40) in zweiten und nachfolgenden Segmenten ist.

5. Rotierendes Schneidwerkzeug (10) nach Anspruch 4, wobei:
in einer Seitenansicht des Werkzeugkörpers (20) Abstände (L1, ... Ln (wobei n eine ganze Zahl größer gleich 2 ist)) von einer vorderen Endfläche (22) des Werkzeugkörpers (20) zu den jeweiligen Schneideinsätzen (40) in der Richtung der Drehachse (O) unter den jeweiligen Segmenten aller Spiralnuten (28) gleich sind; und
alle Winkel (α2, ... αn-1 (n-1≥3)) zwischen benachbarten Schneideinsätzen (40) in den zweiten und nachfolgenden Segmenten gleich sind.

6. Rotierendes Schneidwerkzeug (10) nach einem der Ansprüche 1 bis 5, wobei in zumindest einer der Spiralnuten (28) ein axialer Spanwinkel der Schneideinsätze (40) in zweiten und nachfolgenden Segmenten in Bezug auf eine positive Seite größer ist als ein axialer Spanwinkel des Schneideinsatzes (40) in dem ersten Segment.

## Revendications

1. Outil rotatif de découpe (10) comprenant :
un corps d'outil (20) sensiblement cylindrique présentant un axe de rotation (O) et des inserts de découpe (40) montés sur le corps d'outil (20),
le corps d'outil (20) présentant une surface périphérique (23) pourvue d'une pluralité de rainures en spirale (28) dans lesquelles une pluralité de sièges d'insert (30) est formée,
les inserts de découpe (40) pouvant être disposés de manière amovible sur les sièges d'insert (30),
dans lequel, lorsque des positions des inserts de découpe (40) disposés dans chacune des rainures en spirale (28) sont définies en tant qu'un premier segment à un n^{ième} segment, n étant un nombre entier supérieur ou égal à 2, depuis un côté de surface d'extrémité d'attaque (22) à un côté de surface d'extrémité de base (21) du corps d'outil (20) :
tous les angles tels que vus depuis le côté de surface d'extrémité d'attaque du corps d'outil (20) (β1, ... βm, où m est un nombre entier supérieur ou égal à 2) entre des lignes reliant l'axe de rotation (O) et les inserts de découpe (40) dans les premiers segments des rainures en spirale (28) respectives sont différents les uns des autres ; et
un angle (αt) tel que vu depuis le côté de surface d'extrémité d'attaque du corps d'outil (20) entre l'insert de découpe (40) dans le premier segment et l'insert de découpe (40) dans le n^{ième} segment, qui est un dernier segment, disposés dans la rainure en spirale (28) est différent de chaque angle (β1, ... βm, où m est un nombre entier supérieur ou égal à 2) entre les lignes,
dans lequel chaque insert de découpe (40) comprend une première surface (41) présentant une forme sensiblement triangulaire régulière, une deuxième surface (42) disposée de manière à être opposée à la première surface (41), une surface périphérique (43) reliant la première surface (41) et la deuxième surface (42), et un trou de montage (44) configuré pour recevoir une vis de serrage (50) pour le montage amovible de l'insert de découpe sur le siège d'insert et formée de manière à entrer sensiblement au centre de la première surface (41) et de la deuxième surface (42), plus précisément la première surface (41) présentant une forme hexagonale avec une partie à côté de chaque sommet du triangle qui est chanfreiné, la forme hexagonale présentant des parties latérales longues qui constituent chacune un côté de la forme triangulaire d'origine et des parties latérales courtes qui figurent respectivement sur la partie chanfreinée, les parties latérales longues et les parties latérales courtes étant formées en alternance avec chaque partie latérale longue et chaque partie latérale courte s'entrecroisant selon un angle sensiblement droit ou selon un angle obtus] ;
des bords de découpe sont formés sur des bords d'intersection entre la première surface (41) et la surface périphérique (43), dans lequel des bords de découpe principaux (45) sont formés sur les parties latérales longues et des bords de découpe secondaires (46) sont formés sur les parties latérales courtes ;
chaque siège d'insert (30) comprend une surface de fond plate (31) configurée pour établir un contact avec la deuxième surface (42) de l'insert de découpe (40), une paire de surfaces latérales (32, 33) et un trou de fixation (34) fourni sensiblement au centre de la surface de fond (31) pour fixer l'insert de découpe sur le siège d'insert par vissage ; et
les inserts de découpe (40) sont montés sur les sièges d'insert (30) par la vis de serrage (50) de telle sorte qu'un bord de découpe principal (45) formé sur un côté de la forme triangulaire régulière fait saillie depuis et de manière parallèle à la surface périphérique (23) du corps d'outil (20), et une portion de la surface périphérique (43) de l'insert de découpe (40) qui correspond aux côtés restants de la forme triangulaire régulière établit un contact avec la paire de surfaces latérales (32, 33).

2. Outil rotatif de découpe (10) selon la revendication 1, dans lequel une valeur absolue d'une différence entre : l'angle (αt) entre l'insert de découpe (40) dans le premier segment et l'insert de découpe (40) dans le n^{ième} segment ; et les angles (β1, ... βm (où m est un nombre entier supérieure ou égal à 2)) entre les lignes reliant l'axe de rotation (O) et les inserts de découpe (40) dans les premiers segments des rainures en spirale (28) respectives est inférieure à des angles (α1, ..., αn-1 (n-1 ≥ 2)) entre des lignes reliant l'axe de rotation (O) et des inserts de découpe (40) adjacents tels que vus depuis le côté de surface d'extrémité d'attaque du corps d'outil (20).

3. Outil rotatif de découpe (10) selon la revendication 1 ou 2, dans lequel :
dans une vue latérale du corps d'outil (20), des distances (L1, ..., Ln (où n est un nombre entier supérieur ou égal à 2) depuis une surface d'extrémité d'attaque (22) du corps d'outil (20) aux inserts de découpe (40) respectifs dans une direction de l'axe de rotation (O) sont égales parmi les segments respectifs de toutes les rainures en spirale (28) ;
dans chaque rainure en spirale (28), tous les angles (α1, ..., αn-1 (n-1 ≥ 2)) entre des lignes reliant l'axe de rotation (O) et des inserts de découpe (40) adjacents sont égaux tels que vus depuis un côté de surface d'extrémité d'attaque du corps d'outil (20).

4. Outil rotatif de découpe (10) selon la revendication 1 ou 2, dans lequel, tel que vu depuis le côté de surface d'extrémité d'attaque du corps d'outil (20), concernant des angles (α1, ..., αn-1, (n-1 ≥ 3)) entre des lignes reliant l'axe de rotation (O) et les inserts de découpe (40) adjacents respectifs dans au moins une des rainures en spirale (28), un angle (α1) entre l'insert de découpe (40) dans le premier segment et l'insert de découpe (40) dans un deuxième segment est plus grand que des angles (α2, ..., αn-1 (n-1 ≥ 3)) entre des inserts de découpe (40) adjacents dans des deuxièmes segments et les suivants.

5. Outil rotatif de découpe (10) selon la revendication 4, dans lequel :
dans une vue latérale du corps d'outil (20), des distances (L1, ..., Ln (où n est un nombre entier supérieur ou égal à 2)) depuis une surface d'extrémité d'attaque (22) du corps d'outil (20) aux inserts de découpe (40) respectifs dans la direction de l'axe de rotation (O) sont égales parmi les segments respectifs de toutes les rainures en spirale (28) ; et
tous les angles (α2, ..., αn-1 (n-1 ≥ 3)) entre les inserts de découpe (40) adjacents dans les deuxièmes segments et les segments suivants sont égaux.

6. Outil rotatif de découpe (10) selon l'une quelconque des revendications 1 à 5, dans lequel un angle incliné axial des inserts de découpe (40) dans des deuxièmes segments et les suivants est plus grand par rapport à un côté positif qu'un angle incliné axial de l'insert de découpe (40) dans le premier segment, dans au moins une des rainures en spirale (28).
